# EUROPEAN PATENT APPLICATION

(11) **EP 4 443 073 A1**
(43) Date of publication of application: **09.10.2024**
(21) Application number: 22901186.1
(22) Date of filing: 25.11.2022
(51) Int. Cl.: F24F 13/24, F24F 6/00, F24F 6/10, F24F 11/48, F24F 11/65, F24F 11/77, F24F 13/22

(54) **VENTILATION DEVICE**

(30) Priority: 30.11.2021 JP 2021194175
(71) Applicant: Daikin Industries, Ltd., Osaka-shi, Osaka 530-0001 (JP)
(72) Inventor: MAKIZUMI, Shou, Osaka-shi, Osaka 530-001 (JP)
(74) Representative: Hoffmann Eitle
(86) International application number: PCT/JP2022/043493
(87) International publication number: WO 2023/100753

(57) **Abstract**

A problem to be solved by the present disclosure is a countermeasure against dew condensation in a silencer. In an air conditioner (1), a CPU (81) performs a drying operation of drying an inside of a silencer (62). Since the silencer (62) is detachable, time for the drying operation varies depending on whether the silencer is installed in a supply and exhaust duct (61). The CPU (81) controls the time for the drying operation to be longer when the silencer (62) is installed in the supply and exhaust duct (61) than when the silencer (62) is not installed in the supply and exhaust duct (61).

## Description

### TECHNICAL FIELD

The present disclosure relates to a ventilator that sends outdoor air to indoors or sends indoor air to outdoors.

### BACKGROUND ART

In recent years, air conditioners functioning as ventilators have been widely used. For example, an air conditioner described in Patent Literature 1 (JP 2004-69173 A) can perform air conditioning such as humidification, ventilation, and the like by sending outdoor air to indoors.

In such an air conditioner, there is a case where sound of a blower propagates through a conveyance path of air together with a flow of air sent to indoors and leaks to indoors. Therefore, a silencer is provided in a duct through which air sent from the blower to an indoor unit passes.

### SUMMARY OF THE INVENTION

### <Technical Problem>

However, since the air to be conveyed contains moisture and humidified air may be conveyed in recent years, there is a possibility that dew condensation occurs in the silencer. Since dew condensation causes generation of mold, some countermeasures need to be taken, which is not described in Patent Literature 1. Therefore, there is a problem of countermeasures against dew condensation in the silencer.

### <Solution to Problem>

A ventilator according to a first aspect includes a fan, a duct, a silencer, and a control unit. The duct allows passage of air conveyed by the fan. The silencer is installed in the duct and reduces sound propagating through the duct. The control unit performs a drying operation of drying an interior of the silencer.

In this ventilator, even if dew condensation occurs in the silencer due to moisture contained in the conveyed air, the dew condensation in the silencer is eliminated by performing the drying operation, and generation of mold is suppressed.

A ventilator according to a second aspect is the ventilator according to the first aspect, in which the silencer is detachable. Time for the drying operation varies depending on whether the silencer is installed in the duct.

In this ventilator, even when the silencer is not installed in the duct, the drying operation for the duct is required. In such a case, it is unreasonable that the time for the drying operation when the silencer is installed in the duct is the same as the time for the drying operation when the silencer is not installed in the duct. Therefore, the time for the drying operation varies depending on whether the silencer is installed in the duct.

A ventilator according to a third aspect is the ventilator according to the second aspect, in which the control unit controls the time for the drying operation to be longer when the silencer is installed in the duct than when the silencer is not installed in the duct.

In this ventilator, since the volume of a space to be dried is larger when the silencer is installed in the duct than when the silencer is not installed, it is reasonable to make drying operation time longer when the silencer is installed in the duct than when the silencer is not installed in the duct.

A ventilator according to a fourth aspect is the ventilator according to the first aspect, in which the silencer is detachable. The drying operation is an operation of sending dry air to the duct. The control unit performs control such that the number of rotations of the fan when the silencer is installed in the duct is larger than when the silencer is not installed in the duct.

In this ventilator, when the silencer is installed in the duct, the silencer can reduce sound caused by an increase in a blown air volume even if the blown air volume increases. Therefore, the blown air volume can be increased by making the number of rotations of the fan larger than when the silencer is not installed in the duct.

A ventilator according to a fifth aspect is the ventilator according to any one of the first to fourth aspects, and further includes a humidifying mechanism. The control unit alternately repeats a humidifying operation of supplying humidified air to indoors through the duct and the drying operation.

In this ventilator, dew condensation water accumulating in the silencer during the humidifying operation is evaporated by blowing dry air into the silencer in the next drying operation, and generation of mold can be suppressed.

A ventilator according to a sixth aspect is the ventilator according to the fifth aspect, in which the control unit performs the drying operation before starting the humidifying operation.

In this ventilator, even if dew condensation water is accumulated in the silencer before the start of the humidifying operation, the humidifying operation can be performed after the dew condensation water is evaporated, and an increase in the dew condensation water in the silencer can be suppressed.

A ventilator according to a seventh aspect is the ventilator according to the fifth aspect, in which when stopping the humidifying operation, the control unit stops the humidifying operation after performing the drying operation.

In this ventilator, since the drying operation is performed before the humidifying operation is stopped, it is possible to suppress accumulation of dew condensation water in the silencer.

A ventilator according to an eighth aspect is the ventilator according to any one of the first to fourth aspects, and further includes a humidifying mechanism, a first temperature sensor that detects an outside air temperature, and a second temperature sensor that detects an indoor temperature. The control unit performs a drying operation of sending outside air to the duct when the outside air temperature is higher than the indoor temperature and the interior of the silencer has a relative humidity at which dew condensation easily occurs.

In this ventilator, the drying operation of blowing the outside air into the silencer is performed when the outside air temperature is higher than the indoor temperature and air in the silencer has a relative humidity at which dew condensation easily occurs, and thus, dew condensation in the silencer can be also suppressed when the humidifying operation is not performed.

A ventilator according to a ninth aspect is the ventilator according to any one of the first to fourth aspects, and further includes a humidifying mechanism. The humidifying mechanism includes a casing, a humidifying rotor, and a moisture absorbing passage, a humidifying passage, a heat collecting passage that pass through the humidifying rotor, and a heating unit. The humidifying rotor is rotatably disposed in the casing. The heating unit is provided between the heat collecting passage and the humidifying passage. The humidifying mechanism rotates the humidifying rotor in a forward direction such that each part of the humidifying rotor sequentially faces the moisture absorbing passage, the humidifying passage, and the heat collecting passage during the humidifying operation. During the drying operation, the humidifying mechanism rotates the humidifying rotor such that at least a part of a region of the humidifying rotor facing the heat collecting passage at an end of the humidifying operation faces the humidifying passage.

In this ventilator, the air is preheated through the heat collecting passage, further heated by the heating unit, and blown into the silencer as dry air by passing through a dry high-temperature region of the humidifying rotor facing the humidifying passage. As a result, time for performing the drying operation can be reduced.

A ventilator according to a tenth aspect is the ventilator according to any one of the first to fourth aspects, and further includes a humidifying mechanism. The humidifying mechanism includes a casing, a humidifying rotor, and a moisture absorbing passage, a humidifying passage, and a heat collecting passage that pass through the humidifying rotor, and a heating unit. The humidifying rotor is rotatably disposed in the casing. The heating unit is provided between the heat collecting passage and the humidifying passage. After stopping the humidifying operation of the humidifying mechanism, the control unit stops the humidifying rotor while operating the heating unit.

A ventilator according to an eleventh aspect is the ventilator according to the tenth aspect, in which the control unit operates the heating unit with reduced capability. This suppresses thermal damage to the humidifying rotor.

A ventilator according to a twelfth aspect is the ventilator according to the tenth or eleventh aspect, in which the control unit reduces the number of rotations of the fan. This reduces blowing noise of the fan.

A ventilator according to a thirteenth aspect is the ventilator according to any one of the tenth to twelfth aspects, in which the humidifying mechanism further includes an adsorbing fan that blows the outside air to the moisture absorbing passage. The control unit stops the adsorbing fan after stopping the humidifying operation of the humidifying mechanism.

### BRIEF DESCRIPTION OF THE DRAWINGS

FIG. 1 is an external view of an air conditioner which is a ventilator according to the present embodiment.
FIG. 2 is a system diagram of a refrigerant circuit used in the air conditioner.
FIG. 3 is an exploded perspective view illustrating a configuration of an outdoor unit.
FIG. 4 is a longitudinal sectional view of a silencer.
FIG. 5 is a graph illustrating sound measurement results.
FIG. 6 is a schematic configuration diagram of a humidifying unit.
FIG. 7 is a diagram schematically illustrating a flow of air flowing through a moisture absorbing rotor.
FIG. 8 is a timing chart of a humidifying operation and a drying operation in a heating operation of the air conditioner.
FIG. 9 is a table illustrating a relationship between a drying operation time and a number of rotations of a supply and exhaust fan 43 in the heating operation in FIG. 8.

### DESCRIPTION OF EMBODIMENTS

### (1) Schematic configuration of air conditioner 1

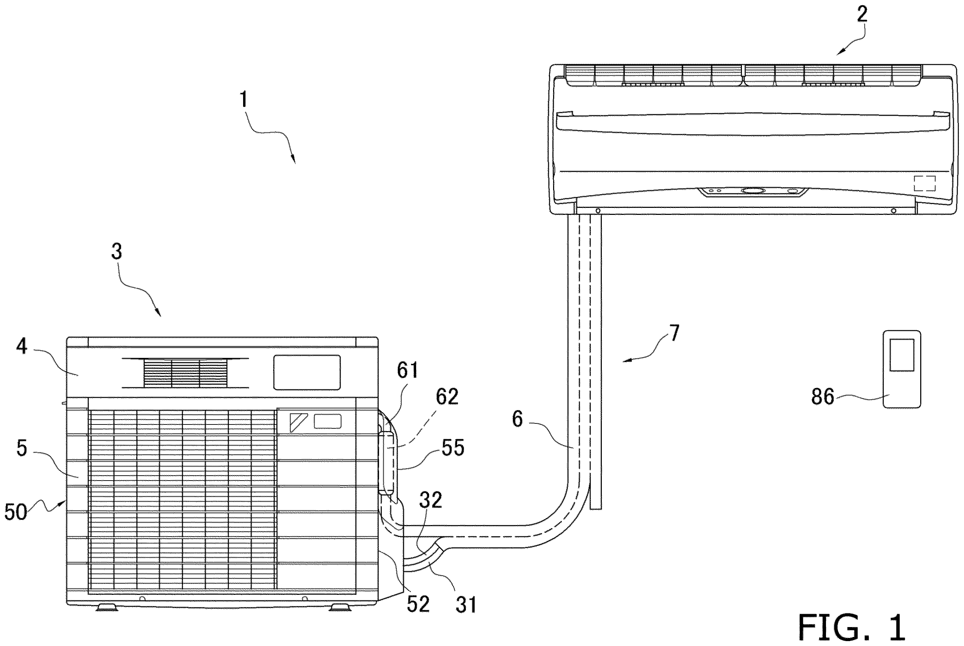

FIG. 1 is an external view of an air conditioner which is a ventilator according to the present embodiment. In FIG. 1, an air conditioner 1 includes an indoor unit 2 and an outdoor unit 3. The indoor unit 2 is attached to an indoor wall surface or the like, and the outdoor unit 3 is installed outdoors.

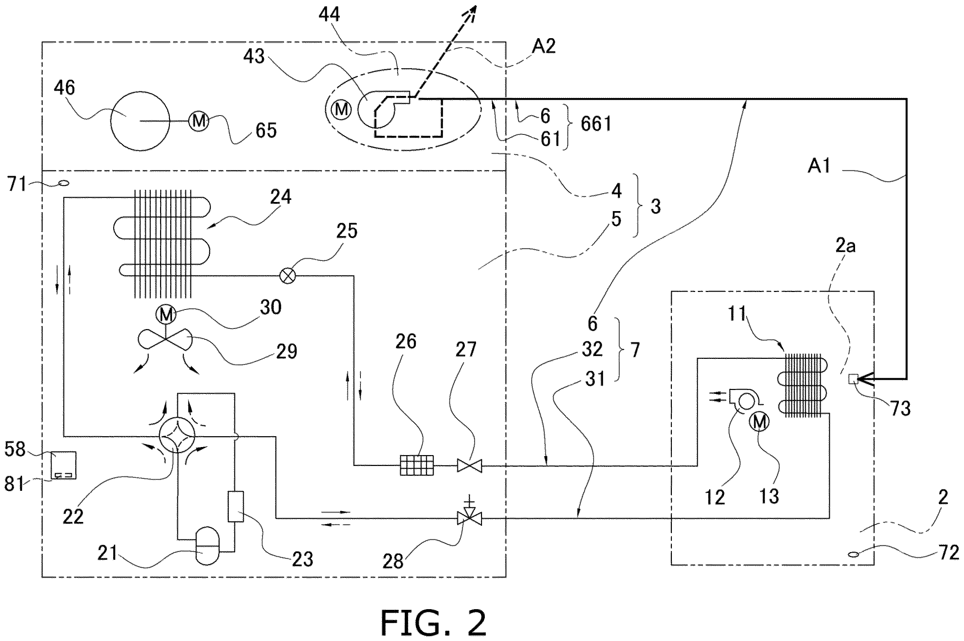

FIG. 2 is a system diagram of a refrigerant circuit used in the air conditioner 1, to which an outline of an air flow is added for convenience of description. In FIG. 2, the indoor unit 2 includes an indoor heat exchanger, and the outdoor unit 3 includes an outdoor heat exchanger. The heat exchangers and refrigerant pipes 31 and 32 connecting the heat exchangers constitute a refrigerant circuit.

### (1-1) Indoor unit 2

The indoor heat exchanger 11 of the indoor unit 2 includes a heat transfer tube and a plurality of fins. The heat transfer tube is folded back a plurality of times at both ends in a length direction. The heat transfer tube is inserted through the fins. The indoor heat exchanger 11 exchanges heat with air in contact with the indoor heat exchanger 11.

The indoor unit 2 further includes a cross-flow fan 12 and an indoor fan motor 13 that rotationally drives the cross-flow fan 12. The cross-flow fan 12 has a cylindrical shape, and a large number of blades are provided on a peripheral surface of the cross-flow fan 12. The cross-flow fan 12 generates an air flow in a direction intersecting an axis. The cross-flow fan 12 sucks indoor air into the indoor unit 2 and blows the air after heat exchange with the indoor heat exchanger 11 to indoors.

### (1-2) Outdoor unit 3

The outdoor unit 3 includes an outdoor air conditioning unit 5, a humidifying unit 4, and a silencer 62. A supply and exhaust hose 6 is provided between the outdoor unit 3 and the indoor unit 2. The supply and exhaust hose 6 is used to supply outdoor air and humidified air from the humidifying unit 4 toward the indoor unit 2 and to exhaust the indoor air to outdoors.

The supply and exhaust hose 6 forms a conveyance path 661 through which air taken into the outdoor unit 3 and sent to the indoor unit 2 passes together with a supply and exhaust duct 61 provided in the outdoor unit 3.

As illustrated in FIG. 1, the silencer 62 is provided in the middle of the supply and exhaust duct 61. The silencer 62 reduces sound transmitted together with air to be sent from the supply and exhaust duct 61 to the indoor unit 2 through the supply and exhaust hose 6.

### (2) Configuration of outdoor air conditioning unit 5

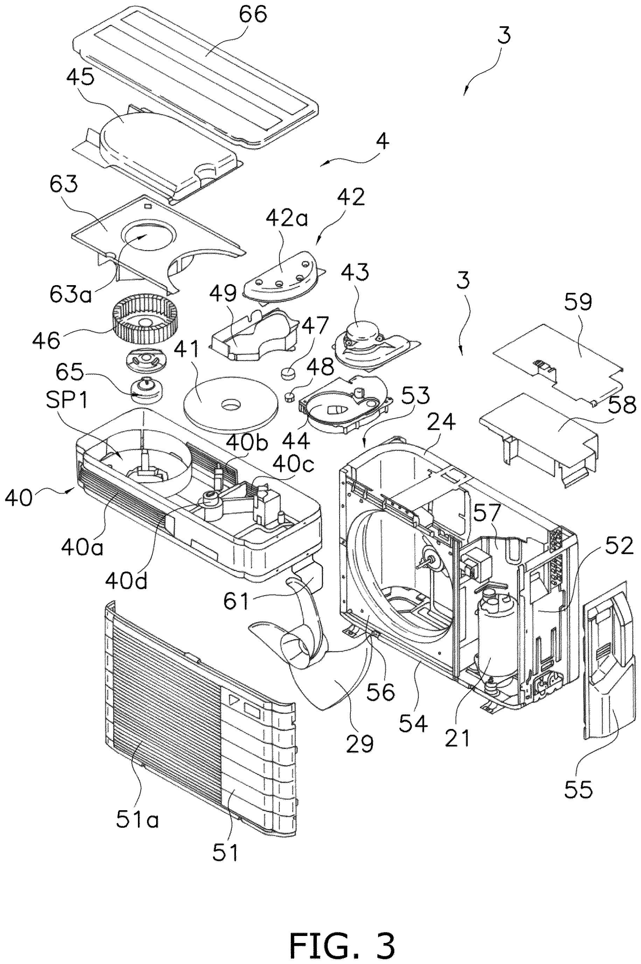

FIG. 3 is an exploded perspective view illustrating a configuration of the outdoor unit 3. In FIG. 3, the outdoor air conditioning unit 5 includes refrigerant circuit components and a casing 50 that accommodates the refrigerant circuit components.

### (2-1) Casing 50

The casing 50 includes a front panel 51, side plates 52 and 53, a protective wire mesh (not illustrated), and a metal bottom plate 54.

The front panel 51 is a resin member that covers a front surface of the outdoor air conditioning unit 5. The front panel 51 is disposed downstream of the outdoor heat exchanger 24 in a flow direction of air passing through the outdoor heat exchanger 24. The front panel 51 has a blow-out port 51a. The blow-out port 51a includes a plurality of slit-shaped openings. The air that has passed through the outdoor heat exchanger 24 is blown out of the outdoor unit 3 from an interior of the outdoor air conditioning unit 5 through the blow-out port 51a. A first bell mouth 56 and a partition plate 57 are attached to the rear of the front panel 51.

The right-side plate 52 and the left-side plate 53 are metal members that cover the sides of the outdoor air conditioning unit 5. Here, the right-side plate 52 is provided on the right side of the outdoor unit 3 in front view. The left-side plate 53 is provided on the left side of the outdoor unit 3 in front view.

The right-side plate 52 and the left-side plate 53 are provided so as to be substantially parallel to a blow-out direction of air blown out from the blow-out port 51a. A shutoff valve cover 55 is attached to the right-side plate 52. The shutoff valve cover 55 protects a liquid shutoff valve 27 and a gas shutoff valve 28.

### (2-2) Refrigerant circuit components

The casing 50 accommodates, as refrigerant circuit components, a compressor 21, a four-way switching valve 22, an accumulator 23, the outdoor heat exchanger 24, and an electric valve 25 (see FIG. 2). The compressor 21, the four-way switching valve 22, the accumulator 23, and the electric valve 25 are disposed in a machine chamber between the partition plate 57 and the right-side plate 52.

As illustrated in FIG. 2, the four-way switching valve 22 is connected to a discharge side of the compressor 21. The accumulator 23 is connected to a suction side of the compressor 21.

The outdoor heat exchanger 24 has a substantially L shape in plan view. The outdoor heat exchanger 24 is disposed in front of a protective metal mesh covering a back surface of the outdoor air conditioning unit 5.

The electric valve 25 has one end connected to the outdoor heat exchanger 24 and the other end connected to one end of the indoor heat exchanger 11 via a filter 26, the liquid shutoff valve 27, and the refrigerant pipe 32.

The four-way switching valve 22 is connected to the other end of the indoor heat exchanger 11 via the gas shutoff valve 28 and the refrigerant pipe 31. The refrigerant pipes 31 and 32 form a collective connection pipe 7 together with the supply and exhaust hose 6.

The outdoor air conditioning unit 5 further includes a propeller fan 29. The propeller fan 29 is provided in a ventilation space between the partition plate 57 and the left-side plate 53 in front of the outdoor heat exchanger 24. The propeller fan 29 is rotationally driven by an outdoor fan motor 30. The propeller fan 29 brings the air introduced into the outdoor air conditioning unit 5 into contact with the outdoor heat exchanger 24 and then discharges the air from the blow-out port 51a of the outdoor air conditioning unit to the front of the front panel 51.

As illustrated in FIG. 3, the outdoor air conditioning unit 5 further includes an electric component unit 58. The electric component unit 58 is disposed in an upper part of the outdoor air conditioning unit 5. The electric component unit 58 includes an electric component box and a printed circuit board on which a CPU 81 for controlling each unit is mounted. An anti-flame plate 59 is attached above the electric component unit 58.

### (3) Configuration of humidifying unit 4

The humidifying unit 4 has a humidifying function, an air supply function, and an air exhaust function. As illustrated in FIG. 3, the humidifying unit 4 includes a housing 40, a moisture absorbing rotor 41, a heater 42, a supply and exhaust fan 43, a switching damper 44, an adsorption duct 45, an adsorption fan 46, a rotor driving motor 47, a rotor driving gear 48, and a heater support plate 49.

### (3-1) Housing 40

The housing 40 covers the front, rear, and both sides of the humidifying unit 4. An upper part of the housing 40 is covered with a top panel 66.

The housing 40 is disposed in contact with the upper part of the outdoor air conditioning unit 5. The housing 40 has an adsorption blow-out port 40a on a front surface of the housing 40. The adsorption blow-out port 40a includes a plurality of slit-shaped openings. The air passes through the adsorption blow-out port 40a and is blown out of the outdoor unit 3.

On a back surface of the housing 40, an adsorption suction port 40b and a supply and exhaust port 40c are arranged side by side in a left-right direction. The adsorption suction port 40b is disposed on the left side when viewed from the front surface, and the supply and exhaust port 40c is disposed on the right side.

The outdoor air is taken in through the adsorption suction port 40b and guided to the moisture absorbing rotor 41. Moisture contained in the outdoor air is adsorbed by the moisture absorbing rotor 41. The air to be sent to the indoor unit 2 passes through the supply and exhaust port 40c, or the air to be exhausted from the indoor unit 2 to outdoors passes through the supply and exhaust port 40c.

The housing 40 has two left and right spaces inside. The moisture absorbing rotor 41 and the like are accommodated in the right space, and the adsorption fan 46 and the like are accommodated in the left space. The left space is referred to as an adsorption fan accommodation space S1.

In the housing 40, the moisture absorbing rotor 41, the heater 42, the supply and exhaust fan 43, the switching damper 44, the adsorption duct 45, and the adsorption fan 46 are disposed.

### (3-2) Moisture absorbing rotor 41

The moisture absorbing rotor 41 is a ceramic rotor having a honeycomb structure having a disk shape, and air can easily pass through the moisture absorbing rotor 41. The moisture absorbing rotor 41 has a large number of polygonal tubular portions in a cross section taken perpendicular to the rotation shaft, and air passes through the tubular portions.

A main part of the moisture absorbing rotor 41 is fired from an adsorbent such as zeolite, silica gel, or alumina. The adsorbent such as zeolite has a property of adsorbing moisture in the air in contact with the adsorbent and desorbing the adsorbed moisture by being heated.

The moisture absorbing rotor 41 is rotatably supported by a support shaft 40d provided in the housing 40. A gear is formed on a peripheral surface of the moisture absorbing rotor 41, and meshes with the rotor driving gear 48 attached to a drive shaft of the rotor driving motor 47.

### (3-3) Heater 42

The heater 42 is disposed so as to cover substantially half (right half) of an upper surface of the moisture absorbing rotor 41. A suction port and a discharge port are formed on a lower surface of the heater 42. Air is sucked from the suction port. The air heated by the heater 42 is exhausted from an exhaust port toward the moisture absorbing rotor 41. The heater 42 is attached above the moisture absorbing rotor 41 with the heater support plate 49 interposed therebetween.

### (3-4) Supply and exhaust fan 43

The supply and exhaust fan 43 is disposed on the side of the moisture absorbing rotor 41. The supply and exhaust fan 43 sends air taken in from outdoors to the indoor unit 2 or exhausts air taken in from the indoor unit 2 to outdoors.

The supply and exhaust fan 43 switches between a supply operation and an exhaust operation by switching the switching damper 44. When sending the outdoor air to the indoor unit 2, the supply and exhaust fan 43 sends the air that has passed through the moisture absorbing rotor 41 and fallen from a predetermined portion of the moisture absorbing rotor 41 to the supply and exhaust duct 61.

The supply and exhaust fan 43 and the indoor unit 2 are connected by the conveyance path 661. The conveyance path 661 includes the supply and exhaust duct 61 and the supply and exhaust hose 6. The supply and exhaust fan 43 supplies air to the indoor unit 2 through the conveyance path 661.

When exhausting the indoor air to outdoors, the supply and exhaust fan 43 exhausts the air sent from the supply and exhaust duct 61 to outdoors from the supply and exhaust port 40c provided on the back surface of the housing 40.

### (3-5) Switching damper 44

The switching damper 44 is a rotary air flow path switching unit disposed below the supply and exhaust fan 43, and is switched between a first state and a second state.

In the first state, the air blown out from the supply and exhaust fan 43 is supplied to the indoor unit 2 through the conveyance path 661. As a result, in the first state, the air flows in the direction of the arrow indicated by a solid arrow A1 in FIG. 2, and the humidified air or the outdoor air is supplied to the indoor unit 2.

In the second state, the air flows in the direction of the arrow indicated by a dashed arrow A2 in FIG. 2, and the air from the indoor unit 2 is exhausted from the supply and exhaust fan 43 to outdoors through the supply and exhaust port 40c.

### (3-6) Adsorption duct 45

The adsorption duct 45 covers a portion of the upper surface of the moisture absorbing rotor 41 where the heater 42 is not located. The adsorption duct 45 forms, together with a second bell mouth 63, an air flow path leading from the upper surface of a left half of the moisture absorbing rotor 41 to an upper part of the adsorption fan accommodation space S 1.

### (3-7) Adsorption fan 46

The adsorption fan 46 is disposed in the adsorption fan accommodation space S1. The adsorption fan 46 is a centrifugal fan. The adsorption fan 46 is rotated by an adsorption fan motor 65. The adsorption fan 46 sucks air from an opening 63a of the second bell mouth 63 disposed above the adsorption fan 46, and generates an air flow flowing from the adsorption suction port 40b to the opening 63a through the moisture absorbing rotor 41.

The adsorption fan 46 exhausts dry air that has adsorbed moisture when passing through the moisture absorbing rotor 41, from the adsorption blow-out port 40a toward the front of the housing 40. The second bell mouth 63 is provided above the adsorption fan accommodation space S1, and guides the air passing through the adsorption duct 45 to the adsorption fan 46.

### (4) Configuration of silencer 62

The silencer 62 is a member that reduces sound transmitted together with air passing through an interior of the silencer. As illustrated in FIG. 1, the silencer 62 is connected to the middle of the supply and exhaust duct 61 protruding from the humidifying unit 4, and is accommodated between the right-side plate 52 and the shutoff valve cover 55.

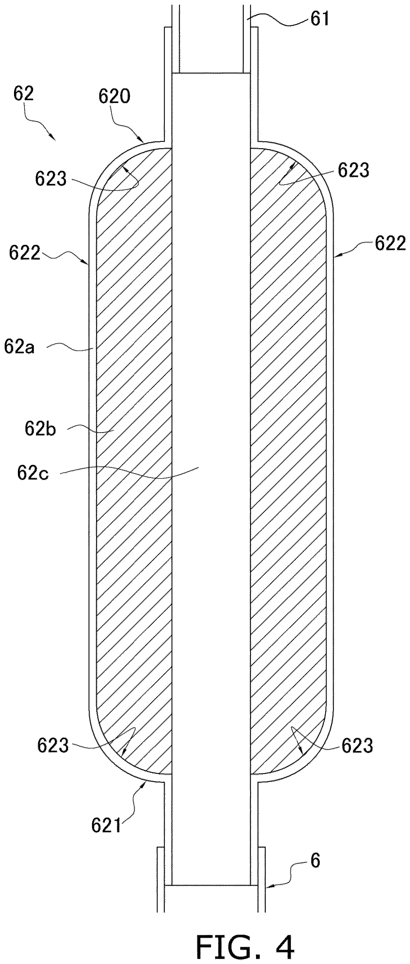

FIG. 4 is a longitudinal sectional view of the silencer 62. In FIG. 4, the silencer 62 has a cylindrical outer shape. The silencer 62 includes a silencer casing 62a and a sound absorbing material 62b.

### (4-1) Silencer casing 62a

The silencer casing 62a includes an upper end 620, a lower end 621, a body 622, and a joint 623. The upper end 620 is positioned on an upper side of the body 622 in a vertical orientation. The lower end 621 is positioned on a lower side of the body 622 in the vertical orientation. The joint 623 connects the upper end 620 and the body 622 and connects the lower end 621 and the body 622 with a gentle curved surface. The body 622 has an inner diameter larger than an inner diameter of the supply and exhaust duct 61.

### (4-2) Sound absorbing material 62b

The sound absorbing material 62b is disposed inside the silencer casing 62a. The sound absorbing material 62b has a cylindrical shape. The sound absorbing material 62b has a hole 62c having a circular cross section at the center. The hole 62c is connected to a hole of the supply and exhaust duct 61. The air to be sent to the indoor unit 2 or to be sent from the indoor unit 2 passes through the hole 62c. As a material of the sound absorbing material 62b, felt, foamed urethane, or the like can be used.

The position where the silencer 62 is provided is not limited to the middle of the supply and exhaust duct 61 as long as being in a path in the outdoor unit 3 through which air to be sent to the indoor unit 2 passes, such as a tip of the supply and exhaust duct 61.

### (4-2-1) Sound reduction effect by silencer 62

In the air conditioner 1 that sends outdoor air to the indoor unit 2, noise is generated in the supply and exhaust fan 43 that sends air to the indoor unit 2. There is a possibility that this sound propagates through the supply and exhaust hose 6 together with the air to be sent to the indoor unit 2 and leaks from the indoor unit 2 to indoors.

However, in the air conditioner 1, the sound generated by the supply and exhaust fan 43 is reduced by the silencer 62 provided in the supply and exhaust duct 61 of the outdoor unit 3 before being sent to the indoor unit 2. Therefore, in the air conditioner 1, sound transmitted from the outdoor unit 3 to the indoor unit 2 is reduced.

Actually, the applicant has confirmed the effect of noise reduction of the silencer 62 through experiments. Specifically, in a state where a microphone is disposed at the center in a longitudinal direction of the indoor unit 2, at a position of 100 cm forward from a front surface of the indoor unit 2, and at a position of 80 cm downward from the center of the front surface of the indoor unit 2, the volume of the air blown out from the indoor unit 2 is changed, and the magnitude of the sound is measured for each air volume.

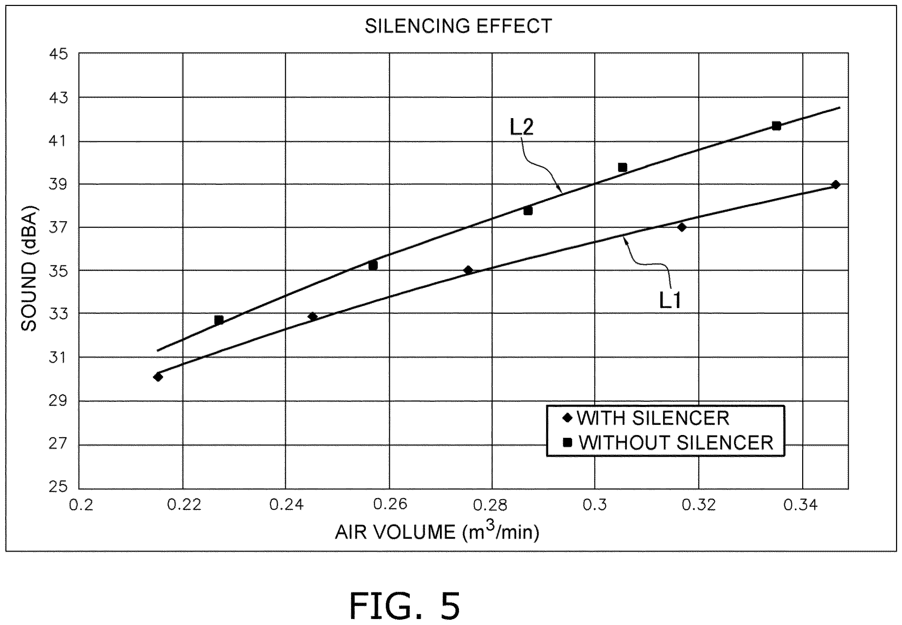

FIG. 5 is a graph illustrating sound measurement results. In FIG. 5, the horizontal axis represents the air volume (unit: m³/min), and the vertical axis represents the magnitude (unit: dBA) of the sound. The magnitude of the sound detected by the microphone is plotted for each air volume. A straight line L1 represents a case where the silencer 62 is attached, and a straight line L2 represents a result of a case where the silencer 62 is not attached. The straight line L1 is located on the side where magnitude of the sound is smaller than the straight line L2, and it can be seen that the sound emitted from the indoor unit 2 becomes smaller in magnitude by attaching the silencer 62.

Not only a case of sending humidified air to the indoor unit 2 but also a case of performing only air supply ventilation of simply sending air from the outdoor unit 3 to the indoor unit 2 has a similar effect to the effect described above.

Furthermore, the air conditioner 1 also has a noise reduction effect when performing an exhaust ventilation operation of taking in air from the indoor unit 2 and blowing out air from the outdoor unit 3 to outdoors.

Since the silencer 62 has an inner diameter larger than the inner diameter of the supply and exhaust duct 61, there is an effect of reducing a pressure loss. Therefore, the number of rotations of the supply and exhaust fan 43 for conveying the same air volume to the indoor unit 2 can be relatively reduced.

### (5) Operation of humidifying unit 4

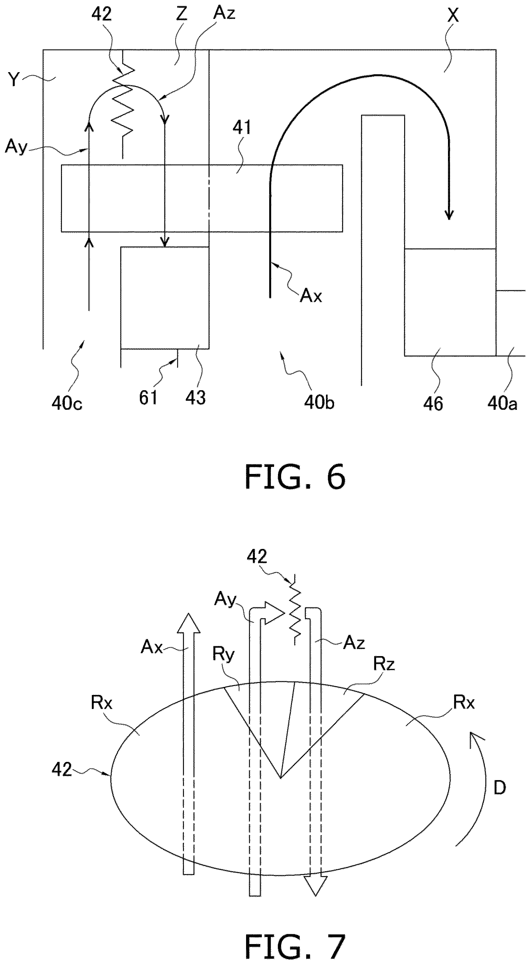

FIG. 6 is a schematic configuration diagram of the humidifying unit 4. FIG. 7 is a diagram schematically illustrating a flow of air flowing through the moisture absorbing rotor 41. In FIGS. 6 and 7, for convenience of explanation, an air passage from the adsorption suction port 40b to the adsorption fan 46 is referred to as a moisture absorbing passage X, an air passage from the supply and exhaust port 40c to the heater 42 is referred to as a heat collecting passage Y, and an air passage from the heater 42 to the supply and exhaust fan 43 is referred to as a humidifying passage Z.

### (5-1) Humidification operation

When the adsorption fan 46 is operated, the humidifying unit 4 takes the outdoor air into the moisture absorbing passage X from the adsorption suction port 40b. Air Ax flowing through the moisture absorbing passage X passes through a first region Rx of the moisture absorbing rotor 41 facing the moisture absorbing passage X, and moisture in the air Ax is absorbed by the first region Rx.

The air Ax passes through the adsorption fan 46 and is exhausted from the adsorption fan accommodation space S1 to the front of the outdoor unit 3 through the adsorption blow-out port 40a.

In the humidifying unit 4, the outdoor air is taken into the heat collecting passage Y from the supply and exhaust port 40c by the rotation of the supply and exhaust fan 43. Air Ay flowing through the heat collecting passage Y passes through a second region Ry of the moisture absorbing rotor 41 facing the heat collecting passage Y, and then is heated by the heater 42. The air Ay is heated by the heater 42 to become high-temperature air Az and flows to the humidifying passage Z. The high-temperature air Az passes through a third region Rz of the moisture absorbing rotor 41 facing the humidifying passage Z and flows to the supply and exhaust duct 61.

The air Ay flowing through the heat collecting passage Y recovers heat from the second region Ry when passing through the second region Ry of the moisture absorbing rotor 41 and has a higher temperature, and then is further heated by the heater 42 to become the high-temperature air Az. The high-temperature air Az flowing through the humidifying passage Z absorbs moisture from the third region Rz when passing through the third region Rz of the moisture absorbing rotor 41.

As illustrated in FIG. 7, the moisture absorbing rotor 41 rotates in a direction indicated by an arrow D and passes through the moisture absorbing passage X, the humidifying passage Z, and the heat collecting passage Y in that order. As a result, in the moisture absorbing rotor 41, the first region Rx of the moisture absorbing rotor 41 facing the moisture absorbing passage X, the third region Rz of the moisture absorbing rotor 41 facing the humidifying passage Z, and the second region Ry of the moisture absorbing rotor 41 facing the heat collecting passage Y sequentially move.

The moisture adsorbed by the moisture absorbing rotor 41 from the air Ax in the moisture absorbing passage X is released by the high-temperature air Az heated by the heater 42, and the high-temperature air Az is humidified.

The supply and exhaust fan 43 sends the air having passed through the moisture absorbing rotor 41 to the indoor unit 2 through the conveyance path 661. The air to be sent to the indoor unit 2 contains moisture adsorbed by the moisture absorbing rotor 41.

The air supplied from the humidifying unit 4 to the indoor unit 2 in this manner is blown to indoors through the indoor heat exchanger 11.

### (5-2) Ventilation operation

By not operating the adsorption fan motor 65 and the heater 42, the air conditioner 1 can also perform only supply of air that takes in outdoor air and sends the air to the indoor unit 2 without performing humidification. The air conditioner 1 can also perform only exhaust of air of sending indoor air to outdoors.

### (5-3) Drying operation

When the temperature of the air sent to the indoor unit 2 decreases, water droplets may be generated due to dew condensation. The water droplets cause mold generation on the supply and exhaust duct 61 and the silencer 62. In addition, the noise reduction effect of the silencer 62 is impaired.

Therefore, in the present embodiment, a drying operation is performed. The drying operation is an operation in which the air heated by the heater 42 is guided to the supply and exhaust duct 61 by the supply and exhaust fan 43 in a state where the drive of the moisture absorbing rotor 41 and the operation of the adsorption fan 46 are stopped to dry the supply and exhaust duct 61, the silencer 62, and the supply and exhaust hose 6.

Heating capacity of the heater 42 at this time is lower than heating capability of the heater 42 during the humidifying operation. In the present embodiment, the heating capability of the heater 42 during the drying operation is about 30% of the heating capability of the heater 42 during the humidifying operation.

In the present embodiment, the CPU 81 may reversely rotate the moisture absorbing rotor 41 such that at least a part of the second region Ry of the moisture absorbing rotor 41 facing the heat collecting passage Y faces the humidifying passage Z after an end of the humidifying operation, and may cause the second region Ry facing the heat collecting passage Y of the moisture absorbing rotor 41 to quickly face the humidifying passage Z.

The second region Ry and the third region Rz of the moisture absorbing rotor 41 facing the heat collecting passage Y and the humidifying passage Z have a low water content and a high temperature. Therefore, the air Ay is preheated through the heat collecting passage Y, further heated by the heater 42, becomes dry air through the third region Rz of the moisture absorbing rotor 41 having a high dry temperature facing the humidifying passage Z, and is exhausted to the conveyance path 661. As a result, time for performing the drying operation is short, time for the humidifying operation is long, and an average humidification amount per hour can be improved.

### (5-3-1) Drying operation during heating operation

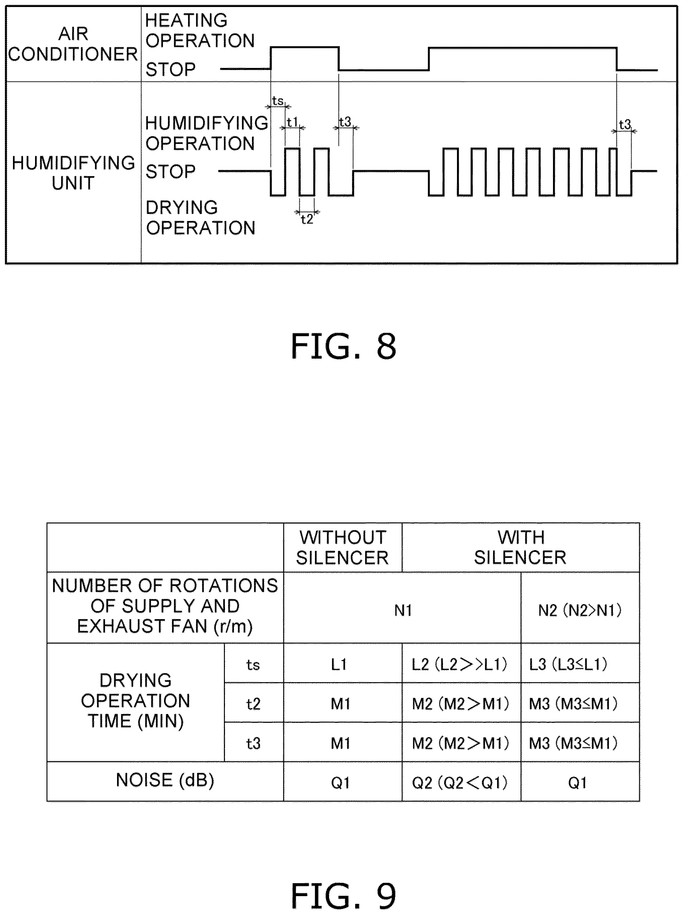

FIG. 8 is a timing chart of the humidifying operation and the drying operation in the heating operation of the air conditioner 1. In FIG. 8, when the air conditioner 1 starts the humidifying operation during the heating operation, the CPU 81 first performs the drying operation for a predetermined drying operation time ts, and then alternately performs the humidifying operation and the drying operation. At this time, a humidifying operation time t1 and a drying operation time t2 are each adjusted in accordance with a length of a humidifying hose and the like with a standard time as M minutes. In the present embodiment, the standard time is three minutes.

When no humidification request command is issued during the drying operation, the drying operation is performed for a predetermined drying operation time t3 from that time and is stopped. When no humidification request command is issued during the humidifying operation, the humidifying operation is immediately stopped, and the drying operation is performed for the predetermined drying operation time t3 from that time and is stopped. In the present embodiment, the predetermined drying operation time t3 when the operation is stopped is the same as the drying operation time t2 during the alternate operation, but may be set to a different time.

### (5-3-2) Drying operation during cooling operation

In the air conditioner 1, the CPU 81 performs the drying operation when determining that an outside air temperature detected by an outside air temperature sensor 71 is higher than an indoor temperature detected by an indoor temperature sensor 72 and a blow-out humidity detected by a blow-out humidity sensor 73 is 80% or more in a cooling operation without the humidifying operation. As a result, even during the cooling operation in which the humidifying operation is not performed, the inside of the supply and exhaust duct 61, the silencer 62, and the supply and exhaust hose 6 can be dried.

### (6) Presence or absence of silencer 62, drying operation time, and number of rotations of supply and exhaust fan 43

There are two types of air conditioners 1, namely, a type without the silencer 62 and a type with the silencer. Furthermore, the silencer 62 can be attached to a type without the silencer 62.

Here, a first control of controlling the drying operation time of the type with the silencer 62 and a second control of controlling the number of rotations of the supply and exhaust fan 43 of the type with the silencer 62 will be described.

### (6-1) First control

When the number of rotations of the supply and exhaust fan is constant, the drying operation time is controlled to be longer in the type with the silencer 62 than in the type without the silencer 62.

FIG. 9 is a table illustrating a relationship between the drying operation time and the number of rotations of the supply and exhaust fan 43 in the heating operation in FIG. 8. In FIG. 9, in the type without the silencer 62, when the number of rotations of the supply and exhaust fan is N1 (r/m) and is constant, the drying operation time ts = L1 (min) and the drying operation time t2 = t3 = M1 (min), and a noise value of the sound propagating through the conveyance path 661 is Q1.

On the other hand, in the type with the silencer 62, when the number of rotations of the supply and exhaust fan is N1 (r/m) and is constant, control is performed such that the drying operation time ts = L2 (minutes) and the drying operation time t2 = t3 = M2 (minutes). At this time, the noise value of the sound propagating through the conveyance path 661 is Q2. In the above, L2 > L1, M2 > M1, and Q2 < Q1.

Since the silencer 62 is attached to the supply and exhaust duct 61, the volume of the conveyance path 661 increases, and thus, the CPU 81 performs control such that the drying operation time becomes longer than when the silencer 62 is not attached.

### (6-2) Second control

In FIG. 9, the CPU 81 can reduce the drying operation times ts, t2, and t3 by increasing the number of rotations of the supply and exhaust fan 43. However, the condition is that the noise value of the sound propagating through the conveyance path 661 after the number of rotations of the supply and exhaust fan 43 is increased does not exceed the noise value of the type without the silencer 62, and the number of rotations satisfying this condition is measured in advance.

In the present embodiment, when the number of rotations of the supply and exhaust fan 43 is N1 and is constant, the noise value of the type without the silencer 62 is Q1, but the number of rotations of the supply and exhaust fan 43 when the noise value of the type with the silencer 62 reaches Q1 is N2 larger than N1.

Therefore, when a user desires to reduce the drying operation time, the number of rotations of the supply and exhaust fan 43 during the drying operation can be changed within a range of N1 to N2 with a remote controller 86 (FIG. 1).

The CPU 81 controls the number of rotations of the supply and exhaust fan 43 in accordance with the number of rotations selected by the user.

Although the first control and the second control have been described by exemplifying the drying operation time and the number of rotations of the supply and exhaust fan 43 in the heating operation, the first control and the second control may be appropriately applied to the drying operation time and the number of rotations of the supply and exhaust fan 43 in the cooling operation.

### (7) Characteristics

(7-1)
   In the air conditioner 1, since the CPU 81 performs the drying operation of drying an interior of the silencer 62, even if dew condensation occurs in the silencer 62 due to moisture contained in the conveyed air, the dew condensation in the silencer 62 is eliminated by the drying operation, and generation of mold is suppressed.
(7-2)
   In the air conditioner 1, the silencer 62 is detachable. The time for the drying operation varies depending on whether the silencer is installed in the supply and exhaust duct 61.
(7-3)
   In the air conditioner 1, the CPU 81 controls the drying operation time to be longer when the silencer 62 is installed in the supply and exhaust duct 61 than when the silencer 62 is not installed in the supply and exhaust duct 61.
(7-4)
   In the air conditioner 1, when the silencer 62 is installed in the supply and exhaust duct 61, the silencer 62 can reduce the sound caused by an increase in a blown air volume even if the blown air volume increases. Therefore, the number of rotations of the supply and exhaust fan 43 can be made larger than when the silencer 62 is not installed in the supply and exhaust duct 61, and the blown air volume can be increased.
(7-5)
   In the air conditioner 1, since the CPU alternately repeats the humidifying operation and the drying operation, dew condensation water accumulating in the silencer 62 during the humidifying operation is evaporated by blowing dry air into the silencer in the next drying operation, and generation of mold can be suppressed.
(7-6)
   In the air conditioner 1, since the CPU 81 performs the drying operation before starting the humidifying operation, even if dew condensation water is accumulated in the silencer 62 before the start of the humidifying operation, the humidifying operation can be performed after the dew condensation water is evaporated, and an increase in the dew condensation water in the silencer 62 can be suppressed.
(7-7)
   In the air conditioner 1, when stopping the humidifying operation, the CPU 81 stops the humidifying operation after performing the drying operation, and it is therefore possible to suppress accumulation of dew condensation water in the silencer 62.
(7-8)
   In the air conditioner 1, the drying operation of blowing the outside air into the silencer is performed when the outside air temperature is higher than the indoor temperature and air in the silencer 62 has a relative humidity at which dew condensation easily occurs, and thus, dew condensation in the silencer can be also suppressed when the humidifying operation is not performed.
(7-9)
   In the air conditioner 1, during the drying operation, the moisture absorbing rotor 41 is rotated such that at least a part of the region of the moisture absorbing rotor 41 facing the heat collecting passage Y at the end of the humidifying operation faces the humidifying passage Z. As a result, the air is preheated through the heat collecting passage Y, further heated by the heater 42, and blown into the silencer 62 as dry air by passing through a dry high-temperature region of the moisture absorbing rotor facing the humidifying passage Z. As a result, the drying operation time can be reduced.
(7-10)
   In the air conditioner 1, after stopping the humidifying operation, the CPU 81 stops the moisture absorbing rotor 41 while operating the heater 42.
(7-11)
   In the air conditioner 1, the CPU 81 operates the heater 42 with reduced capability during the drying operation to suppress thermal damage to the moisture absorbing rotor 41.
(7-12)
   In the air conditioner 1, after stopping the humidifying operation, the CPU 81 stops the adsorption fan 46.
(8) Modification

In the air conditioner 1 according to a modification, the number of rotations of the supply and exhaust fan 43 during the drying operation is reduced. As a result, although the drying time is prolonged, the sound propagating through the conveyance path 661 can be reduced.

The embodiment of the present disclosure has been described above. It will be understood that various changes to modes and details can be made without departing from the gist and scope of the present disclosure recited in the claims.

### REFERENCE SIGNS LIST

- 1:: air conditioner (ventilator)
- 4:: humidifying unit (humidifying mechanism)
- 40:: housing (casing)
- 41:: moisture absorbing rotor (humidifying rotor)
- 42:: heater (heating unit)
- 43:: supply and exhaust fan (fan)
- 46:: adsorption fan (adsorbing fan)
- 61:: supply and exhaust duct (duct)
- 62:: silencer
- 71:: outside air temperature sensor (first temperature sensor)
- 72:: indoor temperature sensor (second temperature sensor)
- 81:: CPU (control unit)
- X:: moisture absorbing passage
- Y:: heat collecting passage
- Z:: humidifying passage

### CITATION LIST

### PATENT LITERATURE

Patent Literature 1: JP 2004-69173 A

## Claims

1. A ventilator (1) comprising:
a fan (43);
a duct (61) through which air conveyed by the fan (43) passes;
a silencer (62) that is installed in the duct (61) and reduces sound propagating through the duct (61); and
a control unit (81) that performs a drying operation of drying an interior of the silencer (62).

2. The ventilator (1) according to claim 1, wherein
the silencer (62) is detachable, and
time for the drying operation varies depending on whether the silencer (62) is installed in the duct (61).

3. The ventilator (1) according to claim 2, wherein the control unit (81) controls the time for the drying operation to be longer when the silencer (62) is installed in the duct (61) than when the silencer (62) is not installed in the duct (61).

4. The ventilator (1) according to claim 1, wherein
the silencer (62) is detachable,
the drying operation is an operation of sending dry air to the duct (61), and
the control unit (81) controls a number of rotations of the fan (43) is larger when the silencer (62) is installed in the duct (61) than when the silencer (62) is not installed in the duct (61).

5. The ventilator (1) according to any one of claims 1 to 4, further comprising a humidifying mechanism (4), wherein the control unit (81) alternately repeats a humidifying operation of supplying humidified air to indoors through the duct (61) and the drying operation.

6. The ventilator (1) according to claim 5, wherein the control unit (81) performs the drying operation before starting the humidifying operation.

7. The ventilator (1) according to claim 5, wherein when stopping the humidifying operation, the control unit (81) stops the humidifying operation after performing the drying operation.

8. The ventilator (1) according to any one of claims 1 to 4, further comprising:
a humidifying mechanism (4);
a first temperature sensor (71) that detects an outside air temperature; and
a second temperature sensor (72) that detects an indoor temperature, wherein
the control unit (81) performs a drying operation of sending outside air to the duct (61) when an outside air temperature is higher than an indoor temperature and the interior of the silencer (62) has a relative humidity at which dew condensation easily occurs.

9. The ventilator (1) according to any one of claims 1 to 4, further comprising a humidifying mechanism (4), wherein
the humidifying mechanism (4) includes
a casing (40),
a humidifying rotor (41) rotatably disposed in the casing (40),
a moisture absorbing passage (X), a humidifying passage (Z), and a heat collecting passage (Y) that pass through the humidifying rotor (41), and
a heating unit (42) provided between the heat collecting passage (Y) and the humidifying passage (Z),
the humidifying mechanism (4) rotates the humidifying rotor (41) in a forward direction such that each part of the humidifying rotor (41) sequentially faces the moisture absorbing passage (X), the humidifying passage (Z), and the heat collecting passage (Y) during the humidifying operation, and
the humidifying mechanism (4) rotates, during the drying operation, the humidifying rotor (41) such that at least a part of a region of the humidifying rotor (41) facing the heat collecting passage (Y) at an end of the humidifying operation faces the humidifying passage (Z).

10. The ventilator (1) according to any one of claims 1 to 4, further comprising a humidifying mechanism (4), wherein
the humidifying mechanism (4) includes
a casing (40),
a humidifying rotor (41) rotatably disposed in the casing (40),
a moisture absorbing passage (X), a humidifying passage (Z), and a heat collecting passage (Y) that pass through the humidifying rotor (41), and
a heating unit (42) provided between the heat collecting passage (Y) and the humidifying passage (Z), and
the control unit (81) stops the humidifying rotor (41) while operating the heating unit (42) after the humidifying mechanism (4) stops the humidifying operation.

11. The ventilator (1) according to claim 10, wherein the control unit (81) operates the heating unit (42) with reduced capability.

12. The ventilator (1) according to claim 10 or 11, wherein the control unit (81) lowers the number of rotations of the fan (43).

13. The ventilator (1) according to any one of claims 10 to 12, wherein
the humidifying mechanism (4) further includes an adsorbing fan (46) that blows the outside air to the moisture absorbing passage (X), and
the control unit (81) stops the adsorbing fan (46) after the humidifying mechanism (4) stops the humidifying operation.
